(19) Europäisches Patentamt
European Patent Office
Office européen des brevets

(11) Publication number: **0 153 173 B1**

# (12) EUROPEAN PATENT SPECIFICATION

(45) Date of publication of patent specification: 30.05.90

(51) Int. Cl.[5]: C 08 L 71/12, C 08 G 65/44 // (C08L71/12, 25:00)

(21) Application number: 85301035.3

(22) Date of filing: 15.02.85

## (54) Process for preparing a polyphenylene ether resin composition.

(30) Priority: 17.02.84 JP 28321/84
20.02.84 JP 30024/84

(43) Date of publication of application:
28.08.85 Bulletin 85/35

(45) Publication of the grant of the patent:
30.05.90 Bulletin 90/22

(84) Designated Contracting States:
DE FR GB NL

(56) References cited:
EP-A-48 155
EP-A-71 093
EP-A-0 116 442
FR-A-2 148 169
US-A-3 432 469
US-A-4 083 828

CHEMICAL ABSTRACTS, vol. 81, 1974, page 24, no. 106315u, Columbus, Ohio, US; & SU - A - 398 573 (K.N.OLEINIKOVA et al.) 27-09-1973

CHEMICAL ABSTRACTS, vol. 85, 1976, page 41, no. 33975c, Columbus, Ohio, US; & JP - A - 76 37 998 (HITACHI CHEMICAL CO., LTD.) 30-03-1976

(73) Proprietor: MITSUBISHI GAS CHEMICAL COMPANY, INC.
5-2, Marunouchi 2-chome Chiyoda-Ku
Tokyo, 100 (JP)

(72) Inventor: Sugio, Akitoshi c/o Mitsubishi Gas Kagaky K.K.
Honsha Kenkyusho 1-1 Niijyuku 6-chome
Katsushika-ku Tokyo (JP)
Inventor: Kawaki, Takao c/o Mitsubishi Gas Kagaky K.K.
Honsha Kenkyusho 1-1 Niijyuku 6-chome
Katsushika-ku Tokyo (JP)
Inventor: Okabe, Masao c/o Mitsubishi Gas Kagaky K.K.
Honsha Kenkyusho 1-1 Niijyuku 6-chome
Katsushika-ku Tokyo (JP)
Inventor: Kobayashi, Toshihiko c/o Mitsubishi Gas Kagaky K.K
Honsha Kenkyusho 1-1 Niijyuku 6-chome
Katsushika-ku Tokyo (JP)

(74) Representative: Myerscough, Philip Boyd et al
J.A.Kemp & Co. 14, South Square Gray's Inn
London, WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 153 173 B1

Courier Press, Leamington Spa, England.

**Description**

This invention relates to a process for preparing a polyphenylene ether resin composition having inhibited coloration or superior heat stability.

Polyphenylene ether resins are known and disclosed in the known literature, for example in U.S. Patents Nos. 3306874, 3306875, 3257357, 3257358 and 4011200, and Japanese Laid-Open Patent Publication No. 126800/1975. Polyphenylene ether resins having a molecular weight higher than a certain point have a high softening point, and are therefore useful in applications requiring heat resistance, However, because of their high softening points, the production of resin compositions containing such polyphenylene ether resins requires higher temperatures for kneading and extrusion than in the case of using other general-purpose resins. Moreover, the resulting resin compositions have to be molded at high temperatures. As is well known, the polyphenylene ether resins are comparatively unstable to heat, and extrusion and molding at high temperatures may cause coloration of the polyphenylene ether resin compositions and their molded articles. Since coloration is undesirable, it is desired to improve the polyphenylene ether resins in this respect.

To prevent coloration of a polyphenylene ether resin, it was proposed to cap hydroxyl groups at the ends of a polyphenylene ether molecule by acylation (see Japanese Patent Publication No. 4277/1967). Methods involving adding various stabilizers have also been suggested.

Stabilizers which are effective for stabilizing polyphenylene ethers include, for example, benzoates (see U.S. Patent No. 3379875), hexaalkylphosphoric triamides or combinations thereof with other compounds (U.S. Patents Nos. 3414536, 3420792, 3429850, 3465062, 3472814, 3483271, 3792121 and 3816562), octaalkylpyrophosphoramides or combinations thereof with other compounds (see U.S. Patent No. 3450670), amines (see U.S. Patents Nos. 3563934 and 3956423), phosphites and hydrazines (see U.S. Patent No. 3639334), alkanolamines (see U.S. Patent No. 3761541), arylphosphonic diamides (see U.S. Patent No. 3792120), sterically hindered phenols having a triazine or isocyanuric ring (see U.S. Patent No. 4154719), substituted dicarboxylic acid dihydrazides (see U.S. Patent No. 3954904), high-molecular-weight phosphites or combinations thereof with other compounds (see U.S. Patent 3952072), amides (see Japanese Patent Publication No. 29748/1969), metal salts or dithiocarbamic acid (see Japanese Patent Publications Nos. 19395/1970 and 8352/1970), carboxylic acid anhydrides (see Japanese Patent Publication No. 29750/1969), phosphites (see Japanese Patent Publication No. 29751/1969), sterically hindered phenols or combinations thereof with other compounds (see Japanese Patent Publications Nos. 43473/1971, 42029/1971, 42030/1971, 42031/1971, 42032/1971 and 42033/1971), sterically hindered phenols having one amide bond in the molecules (see Japanese Patent Publication No. 24782/1971), sterically hindered phenols having one ester linkage in the molecule (see Japanese Patent Publication No. 38623/1973), high-molecular-weight phosphites (Japanese Laid-Open Patent Publications Nos. 23846/1974, 31755/1974 and 40476/1975), and combinations of phosporous acid amides with boron compounds (see Japanese Laid-Open Patent Publication No. 129750/1974).

Polyphenylene ether polystyrene composition per se are known from EP—A—48 155 or EP—A—71 093.

According to this invention there is provided a process for preparing a polyphenylene ether resin composition which comprises (a) preparing a polyphenylene ether resin having a copper content of no more than 10 ppm by oxidatively polycondensating at least one monocyclic phenol in a mixed solvent composed of an aromatic hydrocarbon or halogenated aromatic hydrocarbon which is a good solvent for the polyphenylene ether resin and an aliphatic hydrocarbon which is a poor solvent for the polyphenylene ether resin in the presence of a catalyst composed of a cuprous salt and a primary or secondary amine, and (b) mixing the polyphenylene ether resin with a vinyl aromatic resin.

The resulting polyphenylene ether resin composition has inhibited coloration and comprises a polyphenylene ether resin having an increased glass transition point.

The polyphenylene ether resin may be a homopolymer or copolymer obtained from at least one monocyclic phenol of the formula (1)

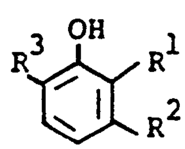

..... (1)

wherein $R^1$, $R^2$ and $R^3$, independently from each other, represent a hydrogen atom or an alkyl group having 1 to 3 carbon atoms, provided that at least one of $R^1$ and $R^3$ is an alkyl group having 1 to 3 carbon atoms, in accordance with the aforesaid process.

In formula (1), the alkyl group having 1 to 3 carbon atoms is a methyl, ethyl, n-propyl or iso-propyl group.

Examples of the monocyclic phenol of general formula (1) include

2,6-dimethylphenol,

2,6-diethylphenol,

2,6-dipropylphenol,

2-methyl-6-ethylphenol,
2-methyl-6-propylphenol,
2-ethyl-6-propylphenol,
o-cresol,
2,3-dimethylphenol,
2,3-diethylphenol,
2,3-dipropylphenol,
2-methyl-3-ethylphenol,
2-methyl-3-propylphenol,
2-ethyl-3-methylphenol,
2-ethyl-3-propylphenol,
2-propyl-3-methylphenol,
2-propyl-3-ethylphenol,
2,3,6-trimethylphenol,
2,3,6-triethylphenol,
2,3,6-tripropylphenol,
2,6-dimethyl-3-ethylphenol, and
2,6-dimethyl-3-propylphenol.

Examples of polyphenylene ethers obtained by polycondenstion of at least one of these phenols include
poly(2,6-dimethyl-1,4-phenylene) ether,
poly(2,6-diethyl-1,4-phenylene) ether,
poly(2,6-dipropyl-1,4-phenylene) ether,
poly(2-methyl-6-ethyl-1,4-phenylene) ether,
poly(2-methyl-6-propyl-1,4-phenylene) ether,
poly(2-ethyl-6-propyl-1,4-phenylene) ether,
2,6-dimethylphenol/2,3,6-trimethylphenol copolymer,
2,6-dimethylphenol/2,3,6-triethylphenol copolymer,
2,6-diethylphenol/2,3,6-trimethylphenol copolymer, and
2,6-dipropylphenol/2,3,6-trimethylphenol copolymer.

The poly(2,6-dimethyl-1,4-phenylene) ether and 2,6-dimethylphenol/2,3,6-trimethylphenol copolymer are especially preferred as the polyphenylene ether resin used in this invention.

According to the oxidative polycondensdation process used in the invention at least one such monocyclic phenol is oxidatively polycondensed in a mixed solvent composed of a good solvent and a poor solvent for the resulting polyphenylene ether. The mixed solvent desirably consists of 1 part by weight of the good solvent and 0.9 to 1.1 parts by weight of the poor solvent.

The good solvent is an aromatic hydrocarbon or a halogenated aromatic hydrocarbon. The aromatic hydrocarbon is preferably benzene which may be substituted by alkyl, especially preferably benzene or a $(C_{1-2}$alkyl)-substituted benzene. The halogenated aromatic hydrocarbon is preferably a chlorine-substituted benzene. Specific examples of the aromatic hydrocarbon are benzene, toluene, xylene, and ethylbenzene, and examples of the halogenated aromatic hydrocarbon are chlorobenzene and dichlorobenzene. Toluene is especially preferred as the good solvent.

The poor solvent is, for example, an aliphatic hydrocarbon, preferably a linear aliphatic hydrocarbon. Aliphatic hydrocarbons, particularly saturated aliphatic hydrocarbons, having 5 to 10 carbon atoms are preferred. Specific examples are n-pentane, n-hexane, n-heptane and n-octane.

According to the above process, the oxidative polycondensation is carried out in the presence of a catalyst composed of a cuprous salt and a primary or secondary amine.

The cuprous salt is, for example, a salt formed between a monovalent copper cation and a mono- or divalent anion. Specific examples are cuprous chloride, cuprous bromide, cuprous iodide, cuprous cyanide, cuprous thiocyanide, cuprous sulfate and cuprous acetate.

Suitable primary or secondary amines for use in this invention are, for example, those of the following formula (2)

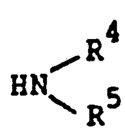

..... (2)

wherein $R^4$ represents an alkyl, cycloalkyl or arylalkyl group, $R^5$ represents a hydrogen atom or an alkyl, cycloalkyl or arylalkyl group, or $R^4$ and $R^5$ may form a ring together with the nitrogen atom to which they are bonded.

The alkyl group for $R^4$ and $R^5$ may be linear or branched, and preferably has 1 to 10 carbon atoms. The cycloalkyl group for $R^4$ and $R^5$ is preferably 5- to 7-membered. The arylalkyl group for them is one in which the aryl moiety is phenyl or $(C_{1-4}$-alkyl)phenyl. Preferably, the alkyl moiety in the alkylphenyl has 1 to 2 carbon atoms.

$R^4$ and $R^5$ may form a ring together with the nitrogen atom to which they are bonded. In this case, $R^4$

and $R^5$ form a 5- to 7-membered heterocyclic group, preferably containing an oxygen or nitrogen atom as a further heteroatom.

Examples of the primary amine of formula (2) include monoalkylamines such as ethylamine, propylamine, isopropylamine, n-butylamine, amylamine and laurylamine, cycloalkylamines such as cyclopentylamine and cyclohexylamine, and aralkylamines such as benzylamine and betaphenethylamine. Examples of the secondary amine of formula (2) include dialkylamines such as dimethylamine, diethylamine, dipropylamine and dibutylamine, dicycloalkylamines such as dicyclohexylamine, and diaralkylamines such as dibenzylamine.

The cuprous salt and the primary or secondary amine are used in catalytic amounts in the above process. For example, the cuprous salt may be used in an amount of 0.001 to 0.01 mole per mole of the phenol, and the primary or secondary amine may be used in an amount of 0.5 to 2.0 moles per mole of the phenol.

The oxidative polycondensation can be carried out by methods known *per se* while passing oxygen or a gas containing oxygen through the reaction system. When the oxidative polycondensation proceeds and the desired polymer is formed, the polymer precipitates as particles in the reaction system. After the reaction, the precipitate is separated by filtration, and the desired polymer is recovered. The reaction is carried out usually at a temperature of 20 to 100°C. Industrially, air is used as the oxygen-containing gas to be blown into the reaction system, but the oxygen-containing gas is not particularly limited to it.

Usually, before filtration, a reaction stopper is added to the resin precipitated in the reaction system to prevent its molecular weight from changing. Advantageously, tetrasodium ethylenediaminetetraacetate (EDTA) or a similar chelating agent or a combination of such a chelating agent and sodium hydrosulfite or catechol is preferably used as the reaction stopper.

The resin recovered by filtration contains copper and nitrogen, which are catalyst residues, as principal impurities when the chelating agent alone or a combination thereof with catechol is used as the reaction stopper. When a combination of the chelating agent and sodium hydrosulfite is used, sulfur, a residue from hydrosulfite, as well as copper and nitrogen exist in the resin as main impurities.

These substances inevitably get into the resin, but are impurities. The amounts of copper and sulfur can be decreased to a considerable degree by adjusting the amount of the reaction stopper and the degree of washing of the recovered resin.

The polyphenylene ether resin prepared in acordance with step (a) of the process of this invention should have a copper content of at most 10 ppm, preferably at most 7 ppm. When sulfur exists as an impurity in addition to copper, the sulfur content is advantageously 250 ppm at the highest.

The marked feature of the polyphenylene ether resin obtained by the above good solvent/poor solvent method is that they have higher glass transition points than polyphenylene ether resins obtained by a conventional solution polymerization method. For example, poly(2,6-dimethyl-1,4-phenylene) ether having an inherent viscosity, measured in chloroform at 30°C, of 0.50 dl/g and a copolymer obtained from 95 mole% of 2,6-dimethylphenol and 5 mole% of 2,3,6-trimethylphenol and having an inherent viscosity, measured in chloroform at 30°C, of 0.52 dl/g, which were produced by the known solution polymerization method, have been found to have a glass transition point of 215 and 222.5°C, respectively, as measured by a differential scanning calorimeter ("DSC-1B" made by Perkin Elmer Company) in nitrogen atmosphere at a temperature elevating rate of 8°C/min. On the other hand, the polyphenylene ether resin obtained by the aforesaid good solvent/poor solvent method usually has a glass transition point at least about 5°C higher than that of a polyphenylene ether resin obtained by the solution polymerization method. Polyphenylene ether resins having an increased glass transition point have high heat resistance.

This feature is probably attributed to the fact that the polyphenylene ether resin obtained by the good solvent/poor solvent method has such a molecular weight distribution that as compared with a polyphenylene ether resin which is obtained by the known solution method using only a good solvent therefor and has the same inherent viscosity, it contains small proportions of a low-molecular-weight substance and a high-molecular-weight substance.

The vinyl aromatic resin used in this invention is a resin containing at least 25% by weight of recurring structural units represented by the following general formula (3)

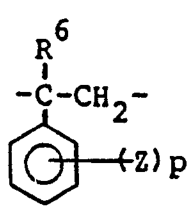

wherein $R^6$ represents a hydrogen atom or a methyl group, Z represents a halogen atom or a methyl group, and p is zero or a positive integer of 1 to 3.

Examples include polystyrene, rubber-modified polystyrene (high-impact polystyrene), poly(p-methylstyrene), rubber-modified poly(p-methylstyrene), styrene/butadiene copolymer, styrene/butadiene/

acrylonitrile copolymer, styrene/acrylic rubber/acrylonitrile copolymer, styrene/alpha-methylstyrene copolymer, and styrene/butadiene block copolymer. These resins may be used as mixtures.

The weight ratio of the polyphenylene ether resin having an increased glass transition temperature to the vinyl aromatic resin is preferably from 95:5 to 5:95, more preferably from 90:10; to 10:90.

The resin composition prepared in accordance with this invention has inhibited coloration. Coloration can be measured by various methods, but in the present invention, it is evaluated by whiteness in accordance with the UCS system. Whiteness (W) in accordance with the USC system can be calculated from the equation

$$W = 100 - \sqrt{(100 - L)^2 + a^2 + b^2}$$

after L, a and b are measured. Larger whiteness values show more inhibited coloration.

An elastomer component may also be incorporated in the resin composition of this invention in addition to the aforesaid resin components. The elastomer, as used herein, is an elastomer in an ordinary sense of the word. For example, the definition used at pages 71 to 78 of A. V. Tobolsky, "Properties and Structures of Polymers" (John Wiley & Sons, Inc., 1960) can be cited, and the elastomer means a polymer having a Young's modulus at ordinary temperature of $10^5$ to $10^9$ dynes/cm$^2$ (0.1 to 1020 kg/cm$^2$). Specific examples of the elastomer include an A—B—A′ type elastomeric block copolymer, a A—B′—A′ type elastomeric block copolymer in which the double bond of the polybutadiene portion is hydrogenated, polybutadiene, polyisoprene, a copolymer of a diene compound and a vinyl aromatic compound, nitrile rubber, an ethylene/propylene copolymer, an ethylene/propylene/diene copolymer (EPDM), thiokol rubber, polysulfide rubber, acrylic rubber, polyurethane rubber, a grafted polymer of butyl rubber and polyethylene, and a polyester elastomer. Among these elastomers, the A—B—A′ type elastomeric block copolymer is preferred. The terminal blocks A and A′ of this block copolymer are blocks of polymerized vinyl aromatic hydrocarbons, and B is a block of a polymerized conjugated diene. Desirably, the molecular weight of the block B is larger than the total molecular weight of the blocks A and A′. The terminal blocks A and A′ may be identical or different. These blocks are a thermoplastic homopolymer or copolymer derived from a vinyl aromatic compound whose aromatic moiety is monocyclic or polycyclic. Examples of such a vinyl aromatic compound are styrene, alpha-methylstyrene, vinyltoluene, vinylxylene, ethylvinylxylene, vinylnaphthalene and mixtures of these. The central block B is an elastomeric polymer derived from a conjugated diene-type hydrocarbon such as 1,3-butadiene, 2,3-dimethylbutadiene, isoprene, 1,3-pentadiene or mixtures thereof. The terminal blocks A and A′ have a molecular weight of preferably about 2,000 to about 100,000, and the central block B has a molecular weight of preferably about 25,000 to about 1,000,000. When the resin composition of this invention further contains the elastomer in addition to the polyphenylene ether resin and the vinyl aromatic resin, the proportion of the polyphenylene ether is usually at least 5% based on the total weight of the resin components in the composition although it varies depending upon the purpose for which the resin composition is produced.

The resin composition of this invention may further include various additives or fillers in addition to the above resin components. For example, fire retardants and stabilizers are important additives. Suitable fire retardants are phosporus-containing compounds and halogen-containing compounds. Examples of the phosporus-containing compounds are phosphates compounds, phosphonate compounds and phosphine oxide compounds. The phosphate compounds include aromatic phosphate compounds and aliphatic phosphate compounds. Generally, the former are preferred because of their superior heat resistance. Specific examples of the aromatic phosphate compounds are triphenyl phosphate, tricresyl phosphate, cresyldiphenyl phosphate, a phosphate prepared from a mixture of isopropylphenol and phenol, and a dimer of cresyldiphenyl phosphate. Chlorine compounds and bromine compounds are general as the halogen-containing compounds, and the bromine compounds are preferred. Specific examples of the bromine compounds are decabromobiphenyl, decabromobiphenyl ether, pentabromotoluene, brominated bisphenol A, brominated polystyrene, a polycarbonate oligomer produced by using brominated bisphenol A, and a brominated polyphenylene ether oligomer.

Examples of useful stabilizers include sterically hindered phenols, organic phosphites, phosphonites, phosphonous acids, cyclic phosphonites, hydrazine derivatives, amine derivatives, carbamate derivatives, thioethers, phosphoric triamide, benzimidazole derivatives and metal sulfides. They may be used in combination.

Examples of preferred fillers are inorganic fillers typified by glass fibers, glass beads, asbestos, wollastonite, mica, talc, clay, calcium carbonate and silica, and organic fillers typified by carbon fibers, aromatic polyamide fibers and heat-resistant phenolic fibers.

There can also be used, for example, ultraviolet absorbers such as benzotriazole derivatives, benzophenone derivatives, salicylate derivatives, sterically hindered amines, oxalic diamine derivatives and organic nickel complexes; polyolefin waxes as lubricants typified by polyethylene and polypropylene waxes; and pigments typified by titanium dioxide, zinc oxide and carbon black. The amounts of these additives may be properly selected according to the types of the additive compounds used and the purposes for which they are added.

The following examples illustrate the resin composition of this invention more specifically. All parts and percentages of the components of the resin compositions in these examples are by weight unless otherwise specified.

Referential Examples 1 to 3 illustrate the production of polymers having various impurity contents by the good solvent/poor solvent method, and Referential Example 4, the production of a polymer by the solution method.

Referential Example 1

Toluene (600 parts) and n-heptane (588 parts) were put in a reactor equipped with a stirrer, a reflux condenser and an air blowing inlet tube, and a ctalyst prepared by dissolving 1.0 part of cuprous iodide in 134 parts of n-butylamine was added, and the mixture was warmed to about 40°C. A monomer solution composed of 188.9 parts of 2,6-dimethylphenol, 11.1 parts of 2,3,6-trimethylphenol, 400 parts of toluene and 392 parts of n-heptane was fed by a metering pump into the resulting solution, and the reaction was started. In 65 minutes, the feeding of the monomer solution was terminated. With the progress of the polymerization reaction, a precipitate of the resulting polymer formed. 120 minutes after the initiation of the reaction, an aqueous solution containing 5.9 parts of tetrasodium ethylenediaminetetraacetate (EDTA) and 2.7 parts of sodium hydrosulfite was added, and stirring of the mixture was continued for a while. Then, the polymer was separated by filtration from the reaction solution, and washed with a mixture of toluene and n-heptane. The resulting polyphenylene ether copolymer was dried. It had an inherent viscosity, measured in chloroform at 30°C, of 0.52 dl/g. The copper and sulfur contents of the polymer were 3 ppm and 20 ppm respectively. The polymer was found to have a glass transition point, measured by DSC, of 231°C. The polyphenylene ether polymer obtained is designated as resin A.

Referential Example 2

Five polyphenylene ether copolymers having different copper and sulfur contents shown in Table 1 (to be referred to as resins B, C, D, E and F) were prepared by repeating Referential Example 1 except that the degree of washing of the polymer obtained after polymerization and filtration was changed.

TABLE 1

| Resin | Impurity contents (ppm) Copper | Sulfur |
|---|---|---|
| A | 3 | 20 |
| B | 5 | 20 |
| C | 7 | 20 |
| D | 10 | 50 |
| E | 7 | 220 |
| F | 10 | 250 |
| a (control) | 11 | 40 |
| b (control) | 12 | 50 |

Referential Example 3

Referential Example 1 was repeated except that the amounts of EDTA and sodium hydrosulfite were changed. Polyphenylene ether copolymers separated by filtration were washed to different degrees to give copolymers having a copper content of more than 10 ppm (to be referred to as resins a and b). The results are indicated in Table 1.

Example 1 and Comparative Example 1

Sixty parts of 2,6-dimethylphenol/2,3,6-trimethylphenol copolymer obtained in Referential Example 1 (resin A), 37 parts of high-impact polystyrene [the matrix had an inherent viscosity, measured in chloroform at 25°C, of 0.89; gel content 16.5% by weight (analyzed by using methyl ethyl ketone)], 2 parts of polystyrene/polybutadiene/polystyrene block copolymer (the weight ratio of the polystyrene block to the polybutadiene block=30:70; a 20% toluene solution of the copolymer had a viscosity, measured at 25°C by a Brookfield Model RVT viscometer 1.5 Pas of (1500 cps), 1 part of ethylene/propylene copolymer (having a reduced specific viscosity, measured in decalin as a solvent at a concentration of 0.1 g/100 ml and a temperature of 135°C, of 2.0 and a glass transition point of −49°C), 6 parts of triphenyl phosphate, 7 parts of titanium dioxide (having a rutile-type crystal structure and a particle diameter of 0.3 to 0.5 μm), 0.4 part of

hydrogenated bisphenol A phosphite resin and 0.6 part of 2,2'-methylenebis(4-methyl-6-tert-butylphenol) were mixed by a Henschel mixer. The mixture was pelletized by a twin-screw extruder (Model AS-30 made by Nakatani Machinery Co.) whose cylinder was set at a maximum temperature of 290°C. The pellets were then molded into a test specimen for measuring Izod impact strength having a shape of 0.3 × 1.3 × 6.4 cm (1/8 × 1/2 × 5/2 inch) by an injection molding machine (Model SJ-35B made by Meiki Co., Ltd.) whose cylinder was set at a maximum temperature of 280°C. The notched Izod impact strength of the test specimen was measured. The test specimen was then aged for 20 days in a hot air circulating oven kept at 115°C, and then its notched Izod impact strength was measured. The result was evaluated by the percent reaction of the Izod impact strength after the heat aging. The results are shown in Table 2.

The five resins B to F obtained in Referential Example 2 were also tested in accordance with the same mixing recipe. The results are also shown in Table 2. The percent retention was calculated in accordance with the following equation.

$$\underset{(\%)}{\text{Retention}} = \frac{\text{Value after the heat aging}}{\text{Value before the heat aging}} \times 100$$

For comparison, the same procedure as above was repeated by using the 2,6-dimethylphenol/2,3,6-trimethylphenol copolymers obtained in Referential Example 3 (resins a and b), and the notched Izod impact strengths of the resin compositions before and after the heat aging were measured. The percent retentions of the impact strengths are also shown in Table 2 (Comparative Example 1).

Larger percent retentions indicate better heat stability.

Table 2

| Run No. | Resin | Retention of Izod impact strength (%) |
|---|---|---|
| Example | | |
| 1 | A | 61 |
| 2 | B | 53 |
| 3 | C | 45 |
| 4 | D | 33 |
| 5 | E | 39 |
| 6 | F | 31 |
| Comparative Example | | |
| 7 | a | 30 |
| 8 | b | 29 |

Example 2 and Comparative Example 2

Example 1 was repeated except that the resin C obtained in Referential Example 2 having a copper content of 7 ppm and a sulfur content of 20 ppm was used as the polyphenylene ether resin, and the hydrogenated bisphenol A phosphite resin and 2,2'-methylenebis(4-methyl-6-tertbutylphenol) were not used (Example 2).

For comparison, Example 2 was repeated except that the resin b obtained in Referential Example 3 having a copper content of 12 ppm and a sulfur content of 50 ppm was used as the polyphenylene ether resin (Comparative Example 2).

The Izod impact strength retention was 33% in Example 2 and 25% in Comparative Example 2.

Example 3 and Comparative Example 3

Sixty parts of the polyphenylene ether copolymer obtained in Referential Example 2 having a copper content of 7 ppm and a sulfur content of 20 ppm (resin C), 40 parts of the same high-impact polystyrene as used in Example 1, 6 parts of triphenyl phosphate, 7 parts of the same titanium dioxide as used in Example 1, 0.4 part of tris(nonylphenyl) phosphite and 0.6 part of 2,6-di-tert-butyl-p-cresol were mixed, and otherwise Example 1 was repeated (Example 3).

For comparison, Example 3 was repeated except that the polymer obtained in Referential Example 3 having a copper content of 12 ppm and a sulfur content of 50 ppm (resin b) was used as the polyphenylene ether resin (Comparative Example 3).

The Izod impact strength retention was 47% in Example 3, and 30% in Comparative Example 3.

Example 4 and Comparative Example 4

Forty-two parts of a polyphenylene ether copolymer obtained by the same procedure as in Referential Example 1 having a copper content of 8 pm and a sulfur content of 20 ppm (resin A), 53.5 parts of the same high-impact polystyrene as used in Example 1, 3.5 parts of the same polystyrene/polybutadiene/polystyrene block copolymer as used in Example 1, 1 part of the same ethylene/propylene copolymer as used in Example 1, 7 parts of the same titanium dioxide as used in Example 1, 0.4 part of hydrogenated bisphenol A phosphite resin and 0.6 part of 2,2'-methylenebis(4-methyl-6-tert-butylphenol) were mixed, and otherwise Example 1 was repeated (Example 4).

For comparison, Example 4 was repeated except that the polyphenylene ether copolymer obtained in Referential Example 3 having a copper content of 12 ppm and a sulfur content of 50 ppm (resin b) was used as the polyphenylene ether resin (Comparative Example 4).

The Izod impact strength retention was 41% in Example 4, and 20% in Comparative Example 4.

Example 5 and Comparative Example 5

Example 1 was repeated except that a polyphenylene ether copolymer having a copper content of 8 ppm and an inherent viscosity, measured in chloroform at 30°C, of 0.51 dl/g prepared by the same operation as in Referential Example 1 without using the sodium hydrosulfite was used instead of the polyphenylene ether copolymer used in Example 1 (Example 5).

For comparison, Example 1 was repeated except that a polyphenylene ether copolymer having a copper content of 11 ppm and an inherent viscosity, measured in chloroform at 30°C, of 0.51 dl/g obtained by the same operation as in Referential Example 3 without using the sodium hydrosulfite was used instead of the polyphenylene ether copolymer used in Example 1 (Comparative Example 5).

The Izod impact strength retention was 42% in Example 5, and 31% in Comparative Example 5.

Example 6 and Comparative Example 6

Example 1 was repeated except that 68 parts of poly(2,6-dimethyl-1,4-phenylene) ether having a copper content of 6 ppm, a sulfur content of 20 ppm and an inherent viscosity, measured in chlorofrom at 30°C, of 0.53 dl/g (prepared by the same method as in Referential Example 1 using 2,6-dimethylphenol alone), 32 parts of the same high-impact polystyrene as used in Example 1, 14 parts of triphenyl phosphate, 0.4 part of hydrogenated bisphenol A phosphite resin and 0.6 part of 2,2'-methylenebis(4-methyl-6-tert-butylphenol) were mixed in a Henschel mixer; the maximum temperature of the cylinder of the injection molding machine was changed to 265°C; and the temperature of the hot air circulating oven was changed to 100°C (Example 6).

For comparison, Example 6 was repeated except that poly(2,6-dimethyl-1,4-phenylene) ether having a copper content of 13 ppm, a sulfur content of 35 ppm and an inherent viscosity, measured in chloroform at 30°C, of 0.53 dl/g and produced by the same method as in Referential Example 3 was used instead of the polyphenylene ether resin used in Example 6 (Comparative Example 6).

The Izod impact strength retention was 65% in Example 6, and 42% in Comparative Example 6.

Referential Example 4 (Control)

The same reactor as used in Referential Example 1 was charged with 188.9 pats of 2,6-xylenol, 11.1 parts of 2,3,6-trimethylphenol and 2000 parts of toluene, and the phenols were completely dissolved. Then, a solution prepared by dissolving 1.0 part of cuprous iodide in 134 parts of n-butylamine was added, and the mixture was warmed to about 40°C. The mixed solution was vigorously stirred. Air was passed through the solution, and the reaction was started. Ninety minutes after the initiation of the reaction, an aqueous solution containing 5.9 parts of EDTA and 2.7 parts of sodium hydrosulfite was added. Stirring of the mixture was continued for a while, and then it was separated into an aqueous solution and a toluene solution. A sufficient amount of methanol was added to the toluene solution to precipitate the resulting polymer, and the precipitate was recovered by filtration. The resulting polyphenylene ether copolymer was

washed with methanol, and dried. It was found to have an inherent viscosity, measured in chloroform at 30°C, of 0.52 dl/g. The copper and sulfur contents of the polymer were less than 2 ppm and less than 20 ppm, respectively. The polymer had a glass transition point, determined by DSC, of 222°C.

Example 7

Forty-two parts of the 2,6-dimethylphenol/2,3,6-trimethylphenol copolymer obtained in Referential Example 1 (resin A), 53.3 parts of high-impact polystyrene (the matrix had an inherent viscosity, measured in chloroform at 25°C, of 0.89 dl/g; gel content 16.5% by weight in methyl ethyl ketone solvent), 3.5 parts of polystyrene/polybutadiene/polystyrene block copolymer (the weight ratio of the polystyrene block to the polybutadiene block was 30:70; a 20% toluene solution of the copolymer had a viscosity, measured by a Brookfield Model RVT viscometer at 25°C, of 1.5 Pas (1500 cps), 1 part of ethylene/propylene copolymer (having a reduced specific viscosity, measured at 135°C in decalin in a concentration of 0.1 g/100 ml, of 2.0 and a glass transition point of −49°C), 7 parts of titanium dioxide (having a rutile-type crystal structure and a particle diameter of 0.3 to 0.5 μm), 0.4 part of hydrogenated bisphenol A phosphite resin and 0.6 part of 2,2′-methylenebis(4-methyl-6-tert-butylphenol) were mixed by a Henschel mixer. The resulting mixture was pelletized by a twin-screw extruder (Model AS-30 made by Nakatani Machinery Co.) whose cylinder was set at a maximum temperature of 290°C). The pellets were then molded into a test specimen having a shape of 3 × 1.3 × 6.4 cm (1/8 × 1/2 × 5/2 inch) for measurement of Izod impact strength. L, a, and b values of the UCS system of this specimen were measured by using a color difference meter (Color Studio CS—K5F made by Nippon Denshoku Kogyo Co., Ltd.). From the measured values, the whiteness was calculated and found to be 82.8.

Comparative Example 7

Example 7 was repeated except that the polyphenylene ether copolymer obtained in Referential Example 4 was used instead of the polyphenylene ether copolymer obtained in Referential Example 1. The whiteness of the test specimen was calculated as 78.1.

Example 8 and Comparative Example 8

Example 1 was repeated except that the resin F produced in Referential Example 2 (having a copper content of 10 ppm and a sulfur content of 250 ppm) or the resin b obtained in Referential Example 3 (having a copper content of 12 ppm and a sulfur content of 50 ppm) was used. The whiteness was 82.1 in the case of using the resin F (Example 8), and 81.8 in the case of using the resin b (Comparative Example 8).

Example 9

In the same way as in Referential Example 1, a polyphenylene ether copolymer having a copper content of 8 ppm, a sulfur content of 20 ppm and an inherent viscosity, measured in chloroform at 30°C, of 0.53 dl/g was produced.

Sixty parts of the resulting copolymer, 40 parts of the same high-impact polystyrene was used in Example 1, 7 parts of the same titanium dioxide as used in Example 1, 0.4 part of tris(nonylphenyl) phosphite and 0.6 part of 2,6-di-tert-butyl-p-cresol were mixed by a Henschel mixer. The mixture was pelletized by a twin-screw extruder (Model AS-30) whose cylinder was set at a maximum temperature of 305°C. The pellets were then molded into the same test specimen as in Example 7 using an injection molding machine (Model SJ-35B) whose cylinder was set at a maximum temperature of 295°C. The whiteness of the test specimen was 80.9.

Comparative Example 9

Example 9 was repeated except that the polyphenylene ether copolymer obtained in Referential Example 4 was used instead of the polyphenylene ether copolymer obtained in Referential Example 1. The resulting test specimen had a whitness of 77.9.

Example 10

Thirty-nine parts of the polyphenylene copolymer produced in Example 9, 61 parts of the same high-impact polystyrene as used in Example 1, 5 parts of the same titanium dioxide as used in Example 1, 0.56 part of hydrogenated bisphenol A phosphite resin and 0.24 part of 2,2′-methylenebis(4-methyl-6-tert-methylphenol) were mixed by using a Henschel mixer. The resulting mixture was pelletized by a twin-screw extruder (Model AS-30) whose cylinder was set at a maximum temperature of 290°C. The pellets were molded into the same test specimen as in Example 7 by using an injection molding machine (Model SJ-35B) whose cylinder was set at a maximum temperature of 280°C. The test specimen had a whiteness of 79.7.

Comparative Example 10

Example 10 was repeated except that the polyphenylene ether copolymer produced in Referential Example 4 was used instead of the polyphenylene ether copolymer produced in Example 9. The resulting test specimen had a whiteness of 77.7.

**Claims**

1. A process for preparing a polyphenylene ether resin composition which comprises (a) preparing a polyphenylene ether resin having a copper content of no more than 10 ppm by oxidatively polycondensing at least one monocyclic phenol in a mixed solvent composed of an aromatic hydrocarbon or halogenated aromatic hydrocarbon which is a good solvent for the polyphenylene ether resin and an aliphatic hydrocarbon which is a poor solvent for the polyphenylene ether resin in the presence of a catalyst composed of a cuprous salt and a primary or secondary amine, and (b) mixing the polyphenylene ether resin with a vinyl aromatic resin.

2. A process according to claim 1 wherein there is used in step (a) at least one monocyclic phenol of the formula

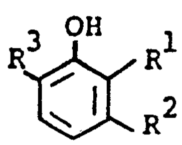

wherein $R^1$, $R^2$ and $R^3$, independently from each other, represent a hydrogen atom or an alkyl group having 1 to 3 carbon atoms, provided that at least one of $R^1$ and $R^3$ is an alkyl group having 1 to 3 carbon atoms.

3. A process according to claim 1 or 2 wherein the polyphenylene ether resin has a sulfur content of no more than 250 ppm.

4. A process according to claim 1, 2 or 3 wherein the polyphenylene ether resin has a copper content of at most 7 ppm.

**Patentansprüche**

1. Verfahren zur Herstellung einer Polyphenylenether-Harzmasse, umfassend

(a) die Herstellung eines Polyphenylenether-Harzes mit einem Kupfergehalt von nicht mehr als 10 ppm durch oxidative Polykondensation mindestens eines monocyclischen Phenols in einem gemischten Lösungsmittel bestehend aus einem aromatischen Kohlenwasserstoff oder halogenierten aromatischen Kohlenwasserstoff, der ein gutes Lösungsmittel für das Polyphenylenether-Harz ist, und einem aliphatischen Kohlenwasserstoff, der ein schlechtes Lösungsmittel für das Polyphenylenether-Harz ist, in Gegenwart eines Katalysators bestehend aus einem Kupfer-I-Salz und einem primären oder sekundären Amin, und

(b) das Vermischen des Polyphenylenether-Harzes mit einem vinylaromatischen Harz.

2. Verfahren nach Anspruch 1, wobei in Stufe (a) mindestens ein monocyclisches Phenol angewandt wird entsprechend der Formel

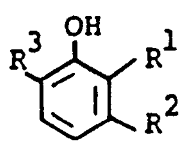

in der $R^1$, $R^2$ und $R^3$ unabhängig voneinander ein Wasserstoffatom oder eine Alkylgruppe mit 1 bis 3 Kohlenstoffatomen bedeuten mit der Maßgabe, daß mindestens einer der Reste $R^1$ und $R^3$ eine Alkylgruppe mit 1 bis 3 Kohlenstoffatomen ist.

3. Verfahren nach Anspruch 1 oder 2, wobei das Polyphenylenether-Harz einen Schwefelgehalt von nicht mehr als 250 ppm aufweist.

4. Verfahren nach Anspruch 1, 2 oder 3, wobei das Polyphenylenether-Harz einen Kupfergehalt von höchstens 7 ppm aufweist.

**Revendications**

1. Procédé de préparation d'une composition de résine de poly(éther de phénylène), qui consiste (a) à préparer une résine de poly(éther de phénylène) ayant une teneur en cuivre qui ne dépasse pas 10 ppm par polycondensation oxydante d'au moins un phénol monocyclique dans un solvant mixte composé d'un hydrocarbure aromatique ou d'un hydrocarbure aromatique halogéné qui et un bon solvant pour la résine de poly(éther de phénylène) et d'un hydrocarbure aliphatique qui est un solvant médiocre pour la résine de poly(éther de phénylène), en présence d'un catalyseur composé d'un sel cuivreux et d'une amine primaire ou secondaire et (b) à mélanger la résine de poly(éther de phénylène) avec une résine aromatique vinylique.

2. Procédé selon la revendication 1, dans lequel on utilise au stade (a) au moins un phénol monocyclique de formule:

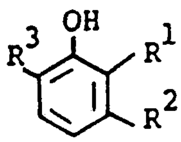

dans laquelle $R^1$, $R^2$ et $R^3$ représentent chacun indépendamment des autres, un atome d'hydrogène ou un groupe alkyle de 1 à 3 atomes de carbone, avec la réserve qu'au moins l'un des $R^1$ et $R^3$ soit un groupe alkyle comportant 1 à 3 atomes de carbone.

3. Procédé selon la revendication 1 ou 2, dans lequel la résine de poly(éther de phénylène) présente une teneur en soufre ne dépassant pas 250 ppm.

4. Procédé selon la revendication 1, 2 ou 3, dans lequel la résine de poly(éther de phénylène) présente une teneur en cuivre ne dépassant pas 7 ppm.